**Europäisches Patentamt**

**European Patent Office**

**Office européen des brevets**

(11) Veröffentlichungsnummer: **0 128 224**
**B1**

(12) **EUROPÄISCHE PATENTSCHRIFT**

(45) Veröffentlichungstag der Patentschrift:
**22.04.87**

(51) Int. Cl.⁴: **B 60 B 7/04**

(21) Anmeldenummer: **83105259.2**

(22) Anmeldetag: **27.05.83**

(54) **Kraftfahrzeugrad.**

(43) Veröffentlichungstag der Anmeldung:
**19.12.84 Patentblatt 84/51**

(45) Bekanntmachung des Hinweises auf die Patenterteilung:
**22.04.87 Patentblatt 87/17**

(84) Benannte Vertragsstaaten:
**AT BE CH DE FR GB IT LI NL SE**

(56) Entgegenhaltungen:
**FR - A - 591 007**
**FR - A - 643 852**
**FR - A - 658 538**
**GB - A - 245 701**
**US - A - 2 016 395**
**US - A - 3 795 997**

(73) Patentinhaber: **BBS Kraftfahrzeugtechnik GmbH. & Co. KG, Postfach 47 Am Hohenstein 13 A, D-7622 Schiltach (DE)**

(72) Erfinder: **Braungart, Martin, Reinerzauer Steige 94, D-7297 Alpirsbach (DE)**

(74) Vertreter: **Kinkelin, Ulrich, Dipl.-Ing., Weimarer Strasse 32/34 Auf dem Goldberg, D-7032 Sindelfingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf ein Kraftfahrzeugrad mit einer Speichenscheibe und einer Radkappe mit den im Oberbegriff des Anspruchs 1 angegebenen bekannten Merkmalen.

Ein Kraftfahrzeugrad dieser Art ist besonders häufig bei französischen PKW's anzutreffen. Die Speichenscheibe wird dabei aus Stahlblech gepresst und in deren Mittelbereich wird eine separate Mutter befestigt, deren Gewindebohrung koaxial zur Rotationsachse ausgerichtet ist. Die Gewindebohrung hat einen Durchmesser von etwa 10 mm und der Kopf der zur Befestigung dienenden Schraube ist als Aussensechskant gestaltet, mit einer Schlüsselweite, die derjenigen der Befestigungsmuttern für die Radbefestigung entspricht. Man kann also die Schraube jederzeit mit Hilfe des Standardschlüssels öffnen und die Radkappe entfernen. Die Radkappe ist also nicht besonders gegen Diebstahl geschützt. Ein weiterer Nachteil der bekannten Ausbildung besteht darin, dass die Radkappe nur mit ihrem äusseren Rand gegen die Speichenscheibe gedrückt wird. Wenn also an der Fettkappe der Radachse Öl oder Fett austritt, was nicht ganz zu vermeiden ist, so kann dieses durch die Gewindebohrung hindurch zur Aussenseite der Speichenscheibe gelangen und wird dort von der Zentrifugalkraft einerseits gegen die Befestigungsmuttern geschleudert, was diese schmutzig und klebrig macht, und andererseits durch den Randspalt zwischen der Radkappe und der Speichenscheibe hindurch nach aussen geschleudert. Diese relativ weit aussen liegende Berührungszone zwischen der Radkappe und der Speichenscheibe kann nie vollständig dicht gehalten werden, so dass Ölspuren streifenförmig nach aussen über die Felge vortreten und häufig in Verbindung mit Schmutz eine kaum zu entfernende Verunstaltung bewirken. In umgekehrter Richtung ist aber auch das Eindringen von Schmutzwasser von aussen her zur Fettkappe gleichfalls nicht unterbunden, so dass hier gewissermassen ein Kreislaufsystem entsteht, in dem dann wieder ein Gemisch aus Schmutz, Wasser und Öl vom Nabenbereich radial nach aussen geschleudert wird. Weiterhin erfolgt die radiale Ausrichtung der Radkappe entsprechend dem Spiel des Schraubenschaftes in der zentralen Bohrung nur sehr unbestimmt, so dass die Radkappe meist entsprechend exzentrisch versetzt angebracht wird und eine bei höheren Geschwindigkeiten merkbare Unwucht darstellt.

Die bekannten Stahl-Speichenscheiben sind auch hinsichtlich einer optisch ansprechenden Gestaltung sehr beschränkt.

Man geht daher zunehmend dazu über, Speichenscheiben aus Leichtmetall herzustellen, die beispielsweise aus einer Aluminiumlegierung gegossen werden. In der Gestaltung ist man hier weitgehend frei, so dass auch gewissermassen antike Speichen imitiert werden können. Bei diesen Ausgestaltungen hat man die Radkappe als durchgehendes einstückiges Teil ausgebildet, welches an der Speichenscheibe mittels einer Rastverbindung angeklipst wurde. Hierbei ist einerseits der Halt nicht zuverlässig, und gerade bei diesen optisch sehr anspruchsvollen Radkappen wird die unrechtmässige Entfernung allzu leicht gemacht.

Aus der US-A-2 016 395 ist es bekannt, den Naben-Speichenbereich eines Kraftfahrzeugrades mit einer zweiteiligen Radkappe abzudecken, wobei der zentrale Kappenteil als Befestigungselement dient. Dabei hat der äussere Kappenteil eine zentrale Bohrung, die wesentlich grösser als 5 cm ist und der zentrale Kappenteil greift mit einem ebenso grossen schaftartigen Ansatz durch die Bohrung sowie durch eine damit fluchtende Öffnung der Radnabe, die aus Stahlblech geformt ist. Am Schaftansatz sind Rastvorsprünge radial federnd angebracht, die hinter die Innenkante der Öffnung schnappen, womit der zentrale Kappenteil an der Radnabe gehalten wird. Der zum Schaftansatz hin umgebördelte Rand des zentralen Kappenteiles liegt mit einer linienhaften Anlagefläche an einer ebenen Ringflächenzone des grösseren Kappenteiles aussen an und drückt dessen innenseitige Ringfläche an eine ebene Gegenfläche der Radnabe, wobei eine Gummischeibe zur besseren Abdichtung eingefügt ist.

Die nur linienhafte Anlagefläche zwischen den Kappenteilen ist praktisch nicht über den gesamten Umfang hin dicht zu halten, weil der über die Schnappverrastung erzielbare Anpressdruck zu klein ist, um geringfügige Wellungen der Berührungsflächen zu ebnen. Solche Deformationen sind aber unvermeidlich. Somit kann durch den unvermeidlichen Spalt Wasser in die Radnabe eindringen und das sich dort bildende Wasser/Öl/Schmutz-Gemisch tritt auf demselben Weg wieder aus und verschmiert die sichtbare Zierfläche der Radkappe und die Felge. Ein weiterer Nachteil besteht darin, dass zumindest der zentrale Kappenteil in radialer Richtung nicht exakt geführt ist, da der Schaftansatz je nach Toleranzlage mit Spiel in der Öffnung der Radnabe sitzt. Eine bei höheren Geschwindigkeiten störende Unwucht ist daher unvermeidlich. Schliesslich ist es äusserst einfach, die Radkappe abzunehmen, was im Falle wertvollerer Ausführungsformen oft zum Verlust führt.

Aufgabe der vorliegenden Erfindung ist es daher, ein Kraftfahrzeugrad der im Oberbegriff des Anspruchs 1 genannten Gattung so weiterzubilden, dass auch hier die Vorteile einer Herstellung aus Leichtmetall ausgenutzt werden können, dass aber andererseits die Fertigung möglichst einfach ist, die Radkappe sicher und exakt an der Speichenscheibe fixiert ist und nicht so ohne weiteres durch unbefugte Personen entfernt werden kann. Weiterhin soll darauf Rücksicht genommen werden, dass die Befestigungsschrauben, welche von der Radkappe überdeckt werden, möglichst wenig verschmutzen und insbesondere kein Öl aus dem Nabenbereich an die Aussenseite der Speichenscheibe gelangen kann. Die Speichenscheibe und die Radkappe und die Schraube sollen in optisch ansprechender Weise gestaltet werden können.

Die sichere und exakte Befestigung ist in besonderem Masse dann von Bedeutung, wenn als Radkappe ein sogenannter Lüfter aufgesetzt wird, der sich scheibenförmig praktisch über die gesamte Innenfläche des Rades bis in die Höhe der Felgen erstreckt, und innenseitig radiale Rippen trägt, durch welche ein forcierter Luftstrom zur Kühlung der Bremsen bewirkt wird. Solche Lüfter verfügen über eine bereits erhebliche Masse, sodass deren Verankerung an der Speichenscheibe auch aus Sicherheitsgründen zuverlässig sein muss und der Aspekt einer geringen Unwucht besonders wichtig ist.

Diese Aufgabe wird mit den kennzeichnenden Merkmalen des Anspruchs 1 gelöst.

Dadurch, dass die Gewindebohrung relativ gross gehalten wird, kann sie aus Festigkeitsgründen unmittelbar im Leichtmetall ausgebildet werden, so dass hierzu kein separater Metalleinsatz erforderlich ist, und es kann daher bei insgesamt einfacher Herstellung die Speichenscheibe aus Leichtmetall hergestellt werden. Der grosse Durchmesser der Gewindebohrung eröffnet die Möglichkeit, die Radkappe unmittelbar im Umgebungsbereich der Gewindebohrung gegen die Speichenscheibe zu drücken, wobei die Spannkraft von der Schraube ohne wesentlichen Radialversatz übertragen wird, so dass der Anpressdruck zwischen dem Schraubenkopf, der Radkappe und der Speichenscheibe gross sein kann, das wiederum die sichere Festlegung fördert und auch die sichere Abdichtung des Nabenbereichs bewirkt. Weiterhin ist der Schraubenkopf entsprechend gross und damit auch in optisch sehr ansprechender Weise gestaltet. An diesem grossen Schraubenkopf kann natürlich ein Standardwerkzeug nicht angesetzt werden, so dass auch die unbefugte Entfernung erschwert wird. Schliesslich wird die Radkappe an der Speichenscheibe zentriert und die Schraube an der Radkappe, so dass für weitestgehende Unwuchtfreiheit gesorgt ist. Die Zentrierung der Schraube durch den Kegelsitz ist spielausgleichend und unter Ausnutzung des Keilprinzips wird die Dichtung verbessert und der Reibschluss vergrössert, wodurch ein Lösen der Verbindung von Hand verhindert wird.

Die radiale Zentrierung der Radkappe kann gemäss den weiterbildenden Merkmalen des Anspruchs 2 exakt vorgegeben werden oder gemäss Anspruch 3 spielausgleichend ausgeführt werden.

Mit den Merkmalen des Anspruchs 4 wird eine weitere Verbesserung der Dichtwirkung erzielt. Die Merkmale des Anspruchs 5 benennen hierzu eine zweckmässige Weiterbildung. Durch die Ringnut wird einerseits ein Sammelraum für allenfalls doch von aussen eindringenden Schmutz gebildet, und die Gegenplanfläche wird zufolge dieser Ringnut federnd gegenüber der starr eingespannten Kegelmantelfläche gehalten.

Die Ansprüche 6 und 7 benennen besonders bevorzugte Abmessungen.

Die im Anspruch 8 angegebene Materialpaarung vermeidet eine Kontakt-Korrosion.

Die Merkmale des Anspruchs 9 dienen ebenfalls dazu, die Kontakt-Korrosion zu unterbinden. Sie ergeben aber auch noch eine in fertigungstechnisch einfacher Weise herstellbare Form.

Das dazu eine Weiterbildung darstellende Merkmal des Anspruchs 10 erhöht einerseits die Festigkeit des Schraubteiles und ergibt andererseits eine Oberfläche, die optisch einheitlich mit der Speichenscheibe ausgeführt werden kann.

Mit dem Merkmal des Anspruchs 12 kann einer etwas anderen Geschmacksrichtung Rechnung getragen werden und vor allem ist zum Lösen des Schraubteiles ein ganz spezielles Werkzeug erforderlich. Gemäss Anspruch 13 ist eine weitere Diebstahlserschwerung zu erzielen.

Mit dem Merkmal des Anspruchs 14 wird sichergestellt, dass die Radkappe immer in einer vorgegebenen Drehlage zur Speichenscheibe ausgerichtet ist, so dass an der Radkappenaussenseite das in der Speichenscheibe vorliegende Muster fortgesetzt werden kann. Der Anspruch 15 benennt eine höherbelastbare Variante.

Die Erfindung wird nachfolgend anhand in der Zeichnung dargestellter besonders bevorzugter Ausführungsbeispiele näher erläutert.

Es zeigt:

Fig. 1 einen Querschnitt durch eine Speichenscheibe mit aufgesetzter Radkappe gemäss der Erfindung in verkleinertem Massstab,

Fig. 2 eine Teilansicht in Pfeilrichtung 2 gemäss Fig. 1,

Fig. 3 einen Teilbereich aus Fig. 1 vergrössert,

Fig. 4 eine der Fig. 3 entsprechende Darstellung gemäss einer Variante der Erfindung.

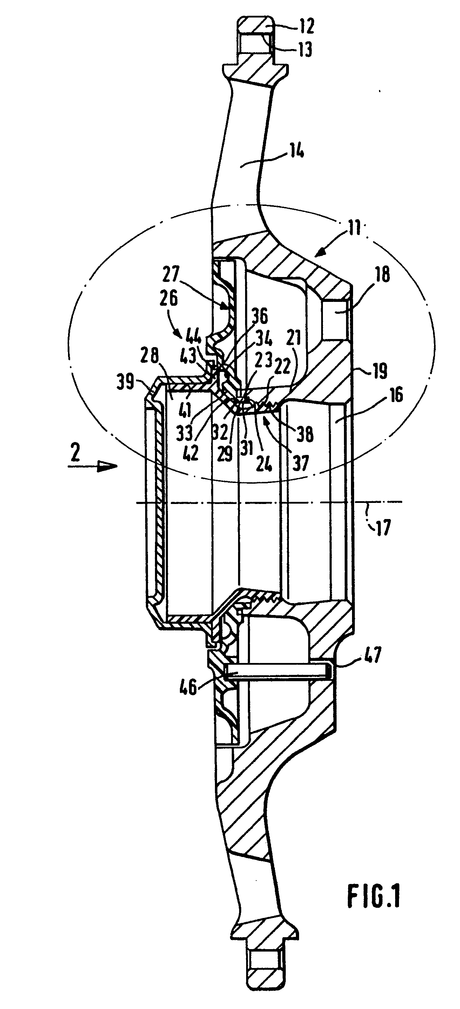

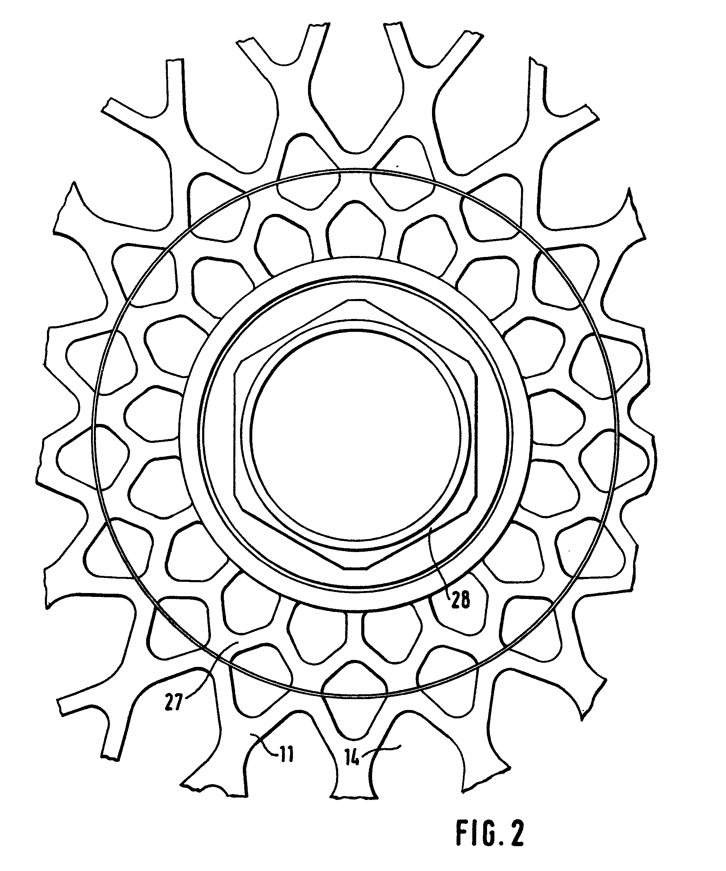

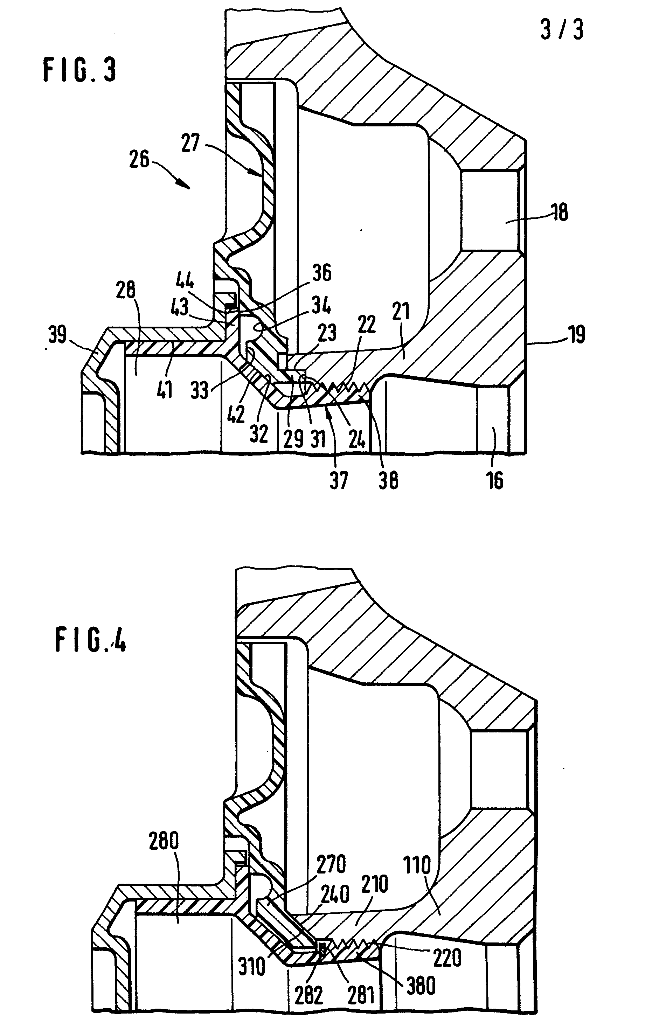

Die Speichenscheibe 11 gemäss Fig. 1 und 3 hat etwa tellerförmige Gestalt. An ihrem Aussenrand 12 befindet sich eine Vielzahl von Bohrungen 13, die dazu dienen, die Speichenscheibe 11 in bekannter und nicht besonders dargestellter Weise mit Felgenteilen zu verbinden. In ihrem äusseren Umfangsbereich weist die Speichenscheibe 11 eine Vielzahl von Durchbrechungen 14 auf, die ihr ein speichenartiges Aussehen verleihen. In ihrem Zentrum ist eine Zentralbohrung 16 ausgenommen, die koaxial zu einer späteren Rotationsachse 17 ausgerichtet ist. Diese Zentralbohrung dient in bekannter Weise als Freistellung beispielsweise für eine Fettkappe an der Achse eines Kraftfahrzeugs. An einem zur Rotationsachse 17 koaxialen Lochkreis sind mehrere Durchgangsbohrungen vorgesehen, von denen nur die Durchgangsbohrung 18 sichtbar ist. Hier treten die für die Befestigung der Speichenscheibe an einer KFZ-Achse dienenden Schraubenbolzen hindurch, wobei die Innenseite 19 der Speichenscheibe 11 im montierten Zustand zur KFZ-Achse weist. An der gegenüberliegenden Seite der Durchgangsbohrungen stützen sich dann in bekannter Weise Befestigungsmuttern ab.

Im Zentralbereich ist die Speichenscheibe 11 mit einem hülsenartigen Fortsatz 21 versehen, der axial an die Zentralbohrung 16 anschliessend eine Innengewindebohrung 22 und daran anschliessend eine zylindrische Ausdrehung 23 aufweist. Die Zentralbohrung 16 hat an ihrer engsten Stelle einen Durchmesser von etwa 71 mm und erstreckt sich in axialer Richtung über eine Länge von etwa 26 mm. Die Innengewindebohrung 22 weist einen Durchmesser von etwa 70 mm auf und erstreckt sich in axialer Richtung über eine Länge von etwa 10 mm. Durch die Ausdrehung 23 entsteht eine Stufe, die eine Gegenfläche 24 bildet. Die Gegenfläche 24 reicht von einem inneren Durchmesser von etwa 72,5 mm zu einem äusseren Durchmesser von etwa 77 mm. Die zylindrische Ausdrehung 23 erstreckt sich in axialer Richtung über eine Länge von etwa 3 mm.

Eine Abdeckung 26, welche zumindest den Zentralbereich mit den Befestigungsmuttern überdeckt, besteht aus einer Radkappe 27 und einer Schraube 28. Die Radkappe 27 weist einen zur Rotationsachse 17 koaxialen in axialer Richtung vorspringenden zylinderförmigen Ansatz 29 auf, dessen Stirnfläche eine Ringfläche 31 bildet, die an der Gegenfläche 24 anliegt. Der Ansatz 29 hat dabei einen Aussendurchmesser von 77 mm und passt damit genau in die Ausdrehung 23. In ihrem der Ringfläche 31 aussenseitig gegenüberliegenden Bereich ist die Radkappe 27 mit einer Kegelsitzfläche 32 versehen, die von einem inneren Durchmesser von etwa 72,5 mm zu einem äusseren Durchmesser von etwa 80 mm bei einem Kegelwinkel von etwa 45° reicht. An die Kegelsitzfläche 32 schliesst sich radial nach aussen eine Übergangsfläche 33 an, gefolgt von einer einwärts gerichteten Ringnut 34. An diese schliesst sich radial auswärts eine Gegenplanfläche 36 an. Die Gegenplanfläche 36 und die Übergangsfläche 33 sind in axialer Richtung um etwa 1 mm gegeneinander versetzt.

Die Schraube 28 ist zweiteilig hergestellt, wobei ein Teil 37 aus Kunststoff hergestellt ist und den Schaft mit einem Aussengewinde 38 trägt, welches mit der Innengewindebohrung 22 korrespondiert. Der übrige Bereich des Teiles 37 gehört zum Schraubenkopf der Schraube 28, der durch eine Kappe 39 vervollständigt wird. Die Kappe 39 und der Teil 37 sind in einem Überlappungsbereich 41 formschlüssig miteinander verbunden und auch verklebt.

An der zum Aussengewinde 38 weisenden Seite des Schraubenkopfes ist eine Anlagefläche ausgebildet, die als Kegelmantelfläche 42 gestaltet ist. Diese korrespondiert mit der Kegelsitzfläche 32 und erstreckt sich von einem inneren Durchmesser von etwa 68 mm bis zu einem äusseren Durchmesser von etwa 82 mm. An den grösseren Durchmesser schliesst sich ein radialer Flansch 43 an, der an seinem Aussenrand eine ringförmige Planfläche 44 bildet, die an der Gegenplanfläche 36 anliegt. Zufolge der Ringnut 34 und dem dadurch gekrümmten Querschnittsverlauf der Radkappe 27 in diesem Bereich kann die Gegenplanfläche 36 im Verhältnis zur Kegelsitzfläche 32 etwas federn, so dass hier keine Übereinstimmung vorliegt und die Dichtwirkung zwischen der Planfläche 44 und der Gegenplanfläche 36 gewährleistet ist.

Beim Einschrauben der Schraube 28 mit ihrem Aussengewinde 38 in die Innengewindebohrung 22 drückt die Kegelmantelfläche 42 keilartig gegen die Kegelsitzfläche 32, wodurch die aus Kunststoff hergestellte Radkappe 27 im Bereich ihres zylindrischen Ansatzes 29 etwas erweitert wird. Dabei wird der zylindrische Ansatz 29 mit seinem Aussenumfang gegen die Innenwand der Ausdrehung 23 gedrückt und zugleich wird durch die axiale Spannkomponente die Ringfläche 31 gegen die Gegenfläche 24 gepresst. Es entsteht hier also eine ausgezeichnete Dichtung und zugleich wird die Radkappe 27 mit hohem Reibschluss an die Speichenscheibe 11 fixiert. Auch zwischen Kegelmantelfläche 42 und Kegelsitzfläche 32 besteht eine durch die Keilwirkung verstärkte Lagesicherung und Dichtwirkung. Zu beachten ist, dass die Spannkraft der Schraube 28 ohne radialem Versatz übertragen wird, denn die Berührungsstelle zwischen der Kegelmantelfläche 42 und der Kegelsitzfläche 32 befindet sich etwa auf dem gleichen radialen Abstand wie die Berührungszone zwischen der Ringfläche 31 und der Gegenfläche 24. Zufolge des grossen Durchmessers der Innengewindebohrung 22 ist der Gewindeeingriff ausreichend hoch belastbar und vermag somit auch sehr hohe Spannkräfte aufzunehmen. Die Dichtung im Bereich zwischen der Planfläche 44 und der Gegenplanfläche 36 wirkt als zusätzliche Abdichtung und verhindert das Eindringen von Schmutz zur eigentlichen Dichtfläche im Bereich der Kegelmantelfläche 42. Die Gefahr, dass diese daher beschädigt wird durch eindringenden Schmutz, der dann beim Festspannen Rillen erzeugt, wird damit vermindert.

Im Ausführungsbeispiel ist der Schraubenkopf der Schraube 28 aus einer Aluminiumlegierung hergestellt und als Aussen-Mehrkant ausgebildet. Mit einem Spezialschlüssel, mit einer Schlüsselweite von etwa 82 mm, lässt sich somit die Schraube 28 montieren bzw. demontieren. Von Bedeutung hierbei ist, dass man einen derartigen Spezialschlüssel nicht ohne weiteres zur Hand hat, womit die Demontage durch unbefugte Personen weitgehend erschwert wird. Wie die Teilansicht der Fig. 2 zeigt, setzt die Radkappe 27 das Speichenmuster der Speichenscheibe 11 fort. Damit das Muster stets in übereinstimmende Lage gebracht wird, ist gemäss Fig. 1 an der Radkappe 27 ein etwa parallel zur Rotationsachse 17 und radial dazu versetzt abstehender Stift 46 verankert, der in eine Messbohrung 47 der Speichenscheibe 11 eingreift.

Die Speichenscheibe 11 kann aus einer Aluminiumlegierung hergestellt werden, ebenso die Kappe 39. Sie können daher, was für den optischen Eindruck sehr wichtig ist, mit der gleichen Oberfläche ausgestattet werden. Die Radkappe 27 und der Teil 37 werden zweckmässigerweise aus Kunststoff hergestellt, was wegen ihrer Form einerseits fertigungstechnisch günstiger ist, andererseits aber auch die Gefahr von Kontakt-Korrosion an den Berührungsstellen vermeidet.

Die Radkappe 27 berührt mit ihrem äusseren Rand die Speichenscheibe 11 nicht, so dass eventuell im dazwischen liegenden Hohlraum befindliches Wasser (Schwitzwasser etwa) austreten kann. Zufolge der guten Dichtung im Nabenbereich wird hier jedoch kein Öl als Verschmutzungsfaktor in Erscheinung treten.

Die Radkappe 27 nach diesem Ausführungsbeispiel ist in erster Linie als optischer Abschluss vorgesehen. Alternativ oder ergänzend dazu kann sie aber auch in der Funktion eines Lüfters ausgebildet werden. Diese Ausbildung ist an sich bekannt und bedarf hier keiner näheren Erläuterung. Entscheidend ist hierbei jedoch, dass der Zentralbereich in der vorstehend anhand der Fig. 1 erläuterten Form ausgebildet ist, um insbesondere einen festen und zuverlässigen Halt an der Speichenscheibe 11 zu gewährleisten und gleichfalls die erforderliche Abdichtung des Nabenbereiches herzustellen.

Die Darstellung in Fig. 4 entspricht weitgehend dem in Fig. 3 gezeigten Ausschnitt aus Fig. 1, jedoch ist die Berührungszone zwischen Radkappe und Speichenscheibe etwas abgewandelt. Zum besseren Überblick sind die Bezugszahlen jeweils einfach um den Faktor 10 vergrössert. Anschliessend an die Innengewindebohrung 220 der Speichenscheibe 110 ist an der Stirnseite des hülsenartigen Fortsatzes 210 eine Gegenfläche 240 als Kegelsitzfläche ausgebildet. Die Ringfläche 310 der Radkappe 270 ist dazu passend geformt. Im Vergleich zur Fig. 3 werden hier einige scharfkantige Übergänge vermieden.

Weiterhin zeigt die Fig. 4 beispielhaft einen Sprengring 281, der in einer Nut 282 vor dem Aussengewinde 380 der Schraube 280 gehalten ist. Durch diese Anordnung sind die Schraube 280 und die Radkappe 270 unverlierbar miteinander verbunden.

In der Zeichnung nicht dargestellt ist eine Variante, wonach der Aussen-Mehrkant und/oder der Innen-Mehrkant (beides kann kombiniert angewandt sein) nicht bloss durch ebene Flächen zusammengesetzt wird. Vielmehr können sie durch mehrere gekrümmte Flächen gebildet werden. Beispielsweise könnte in der Ansicht der Fig. 2 der Aussen-Mehrkant nach Art einer Epizykloide oder Hypozykloide geformt sein.

Anstelle der in Fig. 1 gezeichneten Stift-/Loch-Verdrehsicherung kann an den Fortsatz 21 ein radial abstehender Anschlagnocken fest angeformt sein, gegen den ein Gegennocken der Radkappe anlegbar ist. Vor allem dann, wenn die Radkappe als Lüfter ausgebildet ist, empfiehlt es sich, den Gegennocken so zu gestalten, dass er den Anschlagnocken übergreift, um eine Verdrehung in beiden Richtungen zu sperren.

**Patentansprüche**

1. Kraftfahrzeugrad mit einer tellerförmigen Speichenscheibe, die eine Zentralbohrung und mehrere Durchgangsbohrungen auf einem dazu koaxialen Lochkreis für den Durchtritt von Schraubenbolzen zur Befestigung der Speichenscheibe an einer KFZ-Achse aufweist, wobei die Zentralbohrung koaxial zur Rotationsachse ausgerichtet ist und koaxial dazu und von der im montierten Zustand aussenliegenden Seite zugänglich eine Innengewindebohrung vorgesehen ist, sowie mit einer zumindest den Zentralbereich mit den Durchgangsbohrungen überdeckenden Radkappe, die eine zentrale Bohrung aufweist und mittels einer Schraube an der Speichenscheibe befestigbar ist, wobei der Schaft der Schraube durch die zentrale Bohrung in die Innengewindebohrung greift und die schaftseitige Anlagefläche des Schraubenkopfes aussenseitig an der Radkappe anliegt, dadurch gekennzeichnet, dass die Speichenscheibe (11, 110) aus Leichtmetall hergestellt und die Innengewindebohrung (22, 220) unmittelbar darin eingearbeitet ist, wobei der Durchmesser der Innengewindebohrung (22, 220) und der des Aussengewindes (38, 380) am Schaft der Schraube (28, 280) grösser als 5 cm ist, dass die Radkappe (27, 270) mit einer der Anlagefläche (42) des Schraubenkopfes innenseitig in etwa gegenüberliegenden Ringfläche (31, 310) an einer Gegenfläche (24, 240) der Speichenscheibe (11, 110) anlegbar ist und dort radial zentriert wird und dass die Anlagefläche (42) des Schraubenkopfes als Kegelmantelfläche ausgebildet ist, zu der korrespondierend aussenseitig an der Radkappe (27, 270) eine Kegelsitzfläche (32) vorgesehen ist.

2. Kraftfahrzeugrad nach Anspruch 1, dadurch gekennzeichnet, dass die Ringfläche (31) die Stirnfläche eines zylindrischen Ansatzes (29) der Radkappe (27) ist und die Gegenfläche (24) durch die Stufe einer zylindrischen Ausdrehung (23) gebildet wird, die koaxial zur Innengewindebohrung (22) vor dieser unmittelbar zur Aussenseite der Speichenscheibe (11) reichend vorgesehen ist, wobei der Ansatz (29) in die Ausdrehung (23) eingepasst ist.

3. Kraftfahrzeugrad nach Anspruch 1, dadurch gekennzeichnet, dass die Ringfläche (310) und die Gegenfläche (240) als Kegelsitzfläche ausgebildet sind.

4. Kraftfahrzeugrad nach Anspruch 1, dadurch gekennzeichnet, dass die Anlagefläche des Schraubenkopfes an der Radkappe (27) in eine Kegelmantelfläche (42) und eine im wesentlichen senkrecht zur Rotationsachse (17) ausgerichtete ringförmige Planfläche (44) gegliedert ist, wobei zwischen der Kegelmantelfläche (42) und der mit grösserem Durchmesser um die Kegelmantelfläche (42) reichenden Planfläche (44) eine ringförmige Zone eingerichtet ist, in der keine Berührung zwischen dem Schraubenkopf und der Radkappe erfolgt.

5. Kraftfahrzeugrad nach Anspruch 4, dadurch gekennzeichnet, dass in der Radkappe (27) eine zur Planfläche (44) des Schraubenkopfes korrespondierende Gegenplanfläche (36) ausgebildet ist, an die sich mit kleinerem Radialabstand eine axial einwärts gerichtete Ringnut (34) anschliesst, gefolgt von einer bezüglich der Gegenplanfläche (36) axial einwärts versetzten Übergangsfläche (33), an die sich die Kegelsitzfläche (32) anschliesst.

6. Kraftfahrzeugrad nach Anspruch 5, gekennzeichnet durch folgende Abmessungen:
Die Durchmesser der Innengewindebohrung (22) und des Aussengewindes (38) am Schaft messen etwa 70 mm, die Ringfläche (31) und die Gegenfläche (24) reichen von einem inneren Durchmesser von etwa 72,5 mm zu einem äusseren Durchmesser von 77 mm, die Kegelmantelfläche (42) und die Kegelsitzfläche (32) reichen von einem inneren Durchmesser von etwa 69–72,5 mm zu einem äusseren Durchmesser von etwa 80–82 mm mit einem Kegelwinkel von etwa 45°, die Planfläche (44) und die Gegenplanfläche (36) reichen von einem inneren Durchmesser von etwa 97 mm zu einem äusseren Durchmesser von etwa 99 mm.

7. Kraftfahrzeugrad nach Anspruch 6, gekennzeichnet durch folgende Abmessungen:

Die Innengewindebohrung (22) und das Aussengewinde (38) am Schaft erstrecken sich in axialer Richtung über eine Länge von etwa 10 mm, die zylindrische Ausdrehung (23) erstreckt sich in axialer Richtung über etwa 3 mm, während der zylinderförmige Ansatz (29) sich über eine axiale Länge von mehr als 3 mm erstreckt, die Gegenplanfläche und die Übergangsfläche (33) sind in axialer Richtung um etwa 1 mm gegeneinander versetzt.

8. Kraftfahrzeugrad nach einem oder mehreren der vorhergehenden Ansprüche, dadurch gekennzeichnet, dass die Speichenscheibe (11) aus einer Aluminiumlegierung und die Radkappe (27) aus Kunststoff hergestellt ist.

9. Kraftfahrzeugrad nach Anspruch 8, dadurch gekennzeichnet, dass die Schraube (28) zweiteilig hergestellt ist, wobei ein Teil (37) aus Kunststoff gebildet ist und den Schaft und die zum Schraubenkopf gehörenden Anlageflächen aufweist, während der andere Teil als Kappe (39) den Schraubenkopf vervollständigt.

10. Kraftfahrzeugrad nach Anspruch 9, dadurch gekennzeichnet, dass der andere Teil (39) aus einer Aluminiumlegierung hergestellt ist.

11. Kraftfahrzeugrad nach einem oder mehreren der vorhergehenden Ansprüche, dadurch gekennzeichnet, dass der Kopf der Schraube (28) als Aussen-Mehrkant ausgebildet ist.

12. Kraftfahrzeugrad nach einem oder mehreren der Ansprüche 1 bis 11, dadurch gekennzeichnet, dass der Kopf der Schraube mit einem Innen-Mehrkant ausgebildet ist.

13. Kraftfahrzeugrad nach einem der Ansprüche 11 oder 12 oder beiden, dadurch gekennzeichnet, dass der Mehrkant aus mehreren Kurvenabschnitten zusammengesetzt ist.

14. Kraftfahrzeugrad nach Anspruch 1, dadurch gekennzeichnet, dass an der Radkappe (27) ein etwa parallel zur Rotationsachse (17) radial dazu versetzt abstehender Stift (46) verankert ist, der in eine Messbohrung (47) der Speichenscheibe (11) einsteckbar ist.

15. Kraftfahrzeugrad nach Anspruch 1, dadurch gekennzeichnet, dass die Speichenscheibe einen radial zur Rotationsachse versetzt angeordneten Anschlagnocken aufweist, gegen den ein Gegennocken der Radkappe wenigstens einseitig anlegbar ist, um eine gegenseitige Relativdrehung zu sperren.

**Revendications**

1. Roue de véhicule automobile comportant un disque à rayons en forme de rondelle comprenant un alésage central et plusieurs alésages de passage répartis sur une circonférence coaxiale au premier alésage pour le passage de boulons filetés assurant la fixation du disque à rayons à un essieu de véhicule automobile, l'alésage central étant disposé coaxialement à l'axe de rotation et le dispositif comprenant, disposé coaxialement à l'alésage central et accessible, après montage, du côté extérieur, un alésage à taraudage intérieur, ainsi qu'un capuchon de moyen de roue qui recouvre au moins la zone centrale au moyen des alésages de passage et comporte un alésage central et peut être fixé au disque à rayons au moyen d'un boulon, la tige du boulon s'engageant par l'alésage central dans l'alésage à taraudage intérieur et la surface de contact de la tête de boulon située du côté de la tige s'appliquant du côté extérieur contre le capuchon de moyeu de roue, caractérisé en ce que le disque à rayons (11, 110) est fabriqué en alliage léger et que l'alésage (22, 220) à taraudage intérieur y est directement inséré, le diamètre de l'alésage (22, 220) à taraudage intérieur et celui du filetage extérieur (38, 380) au niveau de la tige du boulon (28, 280) étant supérieurs à 5 cm, en ce que le capuchon de moyeu de roue (27, 270) peut s'appliquer, par une surface annulaire (31, 310) sensiblement opposée du côté intérieur à la surface de contact (42) de la tête de boulon, contre une contre-surface (24, 240) du disque à rayons (11, 110) et y est centrée dans le sens radial et en ce que la surface de contact (42) de la tête de boulon est une surface d'enveloppe conique et est associée à une surface de siège conique (32) correspondante ménagée du côté extérieure sur le capuchon de moyeu de roue (27, 270).

2. Roue de véhicule automobile selon la revendication 1, caractérisée en ce que la surface annulaire (31) est la surface frontale d'un prolongement cylindrique (29) du capuchon de moyeu de roue (27) et en ce que la contre-surface (24) est constituée par le gradin d'un évidement cylindrique (23) qui est coaxial à l'alésage (22) à taraudage intérieur et va, devant cet alésage, jusqu'au côté extérieur du disque à rayons (11), le prolongement (29) s'engageant exactement dans l'évidement (23).

3. Roue de véhicule automobile selon la revendication 1, caractérisée en ce que la surface annulaire (310) et la contre-surface (240) sont des surfaces de siège conique.

4. Roue de véhicule automobile selon la revendication 1, caractérisée en ce que la surface de contact de la tête de boulon avec le capuchon de moyeu de roue (27) est subdivisée en une surface d'enveloppe conique (42) et en une surface plane annulaire (44) orientée sensiblement perpendiculairement à l'axe de rotation (17), le dispositif comprenant, entre la surface d'enveloppe conique (42) et la surface plane (44) de diamètre supérieur entourant la surface d'enveloppe conique (42), une zone annulaire dans laquelle il ne se produit aucun contact entre la tête de boulon et le capuchon de moyeu de roue.

5. Roue de véhicule automobile selon la revendication 4, caractérisée en ce que le capuchon de moyeu de roue (27) comporte une contre-surface (36), correspondant à la surface plane (44) de la tête de boulon, à laquelle se raccorde, à une distance inférieure dans le sens radial, une rainure annulaire (34) dirigée vers l'intérieur, suivie par une surface de transition (33) qui est décalée axialement vers l'intérieur par rapport à la contre-surface plane (36) et à laquelle se raccorde la surface de siège conique (32).

6. Roue de véhicule automobile selon la revendication 5, caractérisée par les dimensions suivantes:

les diamètres de l'alésage (22) à taraudage intérieur et du filetage extérieur (38) au niveau de la tige mesurent environ 70 mm, la surface annulaire (31) et la contre-surface (24) vont d'un diamètre intérieur de 72,5 mm environ à un diamètre extérieur de 77 mm, la surface d'enveloppe conique (42) et la surface de siège conique (32) vont d'un diamètre intérieur d'environ 69 à 72,5 mm à un diamètre extérieur d'environ 80 à 82 mm, avec un angle de cône de 45° environ, la surface plane (44) et la contre-surface plane (36) vont d'un diamètre intérieur de 97 mm environ à un diamètre extérieur de 99 mm environ.

7. Roue de véhicule automobile selon la revendication 6, caractérisée par les dimensions suivantes:

l'alésage (22) à taraudage intérieur et le filetage extérieur (38) au niveau de la tige s'étendent dans le sens axial sur une longueur de 10 mm environ, l'évidement cylindrique (23) s'étend dans le sens axial sur 3 mm environ tandis que le prolongement cylindrique (29) s'étend sur une longueur axiale de plus de 3 mm, la contre-surface et la surface de transition (33) sont décalées l'une par rapport à l'autre dans le sens axial de 1 mm environ.

8. Roue de véhicule automobile selon l'une ou plusieurs des revendications précédentes, caractérisée en ce que le disque à rayon (11) est en aluminium et le capuchon de moyeu de roue (27) est en matière plastique.

9. Roue de véhicule automobile selon la revendication 8, caractérisée en ce que le boulon (28) est en deux parties, l'une de ces parties (37) étant en matière plastique et comportant la tige et les surfaces de contact faisant partie de la tête de boulon, tandis que l'autre partie complète la tête de boulon sous la forme d'un capuchon (39).

10. Roue de véhicule automobile selon la revendication 9, caractérisée en ce que l'autre partie (39) est en alliage d'aluminium.

11. Roue de véhicule automobile selon l'une ou plusieurs des revendications précédentes, caractérisée en ce que la tête du boulon (28) est à plusieurs pans.

12. Roue de véhicule automobile selon l'une ou plusieurs des revendications précédentes, caractérisée en ce que la tête du boulon comporte plusieurs pans intérieurs.

13. Roue de véhicule automobile selon l'une des revendications 11 ou 12, ou les deux, caractérisée en ce que la pièce à plusieurs pans comprend plusieurs secteurs courbes.

14. Roue de véhicule automobile selon la revendication 1, caractérisée en ce qu'au capuchon de moyeu de roue (27) est ancrée une cheville (46), à peu près parallèle à l'axe de rotation (17) et orientée dans le sens radial qui peut être insérée dans un alésage de mesure (47) du disque à rayons (11.).

15. Roue de véhicule automobile selon la revendication 1, caractérisée en ce que le disque à rayons comporte une came de butée décalée dans le sens radial vers l'axe de rotation et contre laquelle une contre-came du capuchon de moyeu de roue peut s'appliquer au moins d'un côté pour empêcher toute rotation relative.

**Claims**

1. Motor vehicle wheel having a plate-shaped spoke disc comprising a central bore and a plurality of through bores arranged in a circle co-axial therewith for passage of bolts for fixing the spoke disc on a motor vehicle axle, the central bore being aligned co-axially of the axis of rotation and, co-axially therewith and accessible from the outside when installed, an internally screw-threaded bore, and with a hub-cap which covers at least the central zone incorporating the through bores, the hub-cap comprising a central bore and being adapted to be fixed to the scope disc by a bolt, the shank of the bolt engaging through the central bore into the internally screw-threaded bore while the shank-end bearing face of the bolt head has its outside bearing on the hub-cap, characterised in that the spoke disc (11, 110) is produced from light metal, the internally screw-threaded bore (22, 220) being machined directly therein, the diameter of the internally screw-threaded bore (22, 220) and that of the external screw-thread (38, 380) on the shank of the bolt (28, 280) being greater than 5 cms, and in that an annular face (31, 310) of the hub-cap (27, 270), which is on the inside substantially opposite the bearing face (42) of the bolt head, can be applied against a matching face (24, 240) of the hub disc (11, 110) being centred there radially and in that the bearing plate (42) of the bolt head is constructed as a conical surface, a conical seating surface (32) being provided on the outside of the hub-cap (27, 270) to correspond thereto.

2. Motor vehicle wheel according to Claim 1, characterised in that the annular face (31) is the end face of the cylindrical projection (29) on the hub-cap (27), the mating surface (24) being constituted by the step of the cylindrical recess (23) which is co-axial of the internally screw-threaded bore (22) extending from in front of this directly to the outside of the spoke disc (11), the projection (29) fitting into the recess (23).

3. Motor vehicle wheel according to Claim 1, characterised in that the annular surface (310) and the mating surface (240) are constructed as conical seating surfaces.

4. Motor vehicle wheel according to Claim 1, characterised in that the bearing surface of the bolt head on the hub-cap (27) is arranged as a conical surface (42) and as an annular flat surface (44) orientated substantially at a right angle to the axis of rotation (17), an annular zone in which there is no contact between the bolt head and the hub-cap being arranged between the conical face (42) and the flat face (44) which is of larger diameter and which extends around the conical face (42).

5. Motor vehicle wheel according to Claim 4, characterised in that there is in the hub-cap (27) and corresponding to the flat surface (44) of the bolt head a matching flat surface (36) adjacent to which, with a smaller radial gap, there is an axially inwardly-directed annular groove (34) followed by a transition surface (33) which is axially offset inwardly in relation to the matching flat surface (33) and adjacent to which there is the conical seating surface (32).

6. Motor vehicle wheel according to Claim 5, characterised by the following dimensions:

the diameters of the internally screw-threaded bore (22) and of the external screw-thread (38) on the shank measure about 70 mm, the annular surface (31) and the matching surface (24) range from an inside diameter of about 72.5 mm to an outside diameter of 77 mm, the conical surface (42) and the conical seating surface (32) range from an inside diameter of about 69 to 72.5 mm to an outside diameter of about 80 to 82 mm with a cone angle of about 42 degrees, the flat surface (44) and matching flat surface (36) range from an inside diameter of about 97 mm to an outside diameter of about 99 mm.

7. Motor vehicle wheel according to Claim 6, characterised by the following dimensions:

the internally screw-threaded bore (22) and the external screw-thread (38) on the shank extend in an axial direction over a length of about 10 mm, the cylindrical recess (23) extends in an axial direction over about 3 mm, while the cylindrical projection (29) extends over an axial length of more than 3 mm, the matching flat surface and the transition surface (33) are offset by about 1 mm in respect of each other in an axial direction.

8. Motor vehicle wheel according to one or more of the preceding claims, characterised in that the spoke disc (11) is produced from an aluminium alloy while the hub-cap (27) is produced from a synthetic plastic material.

9. Motor vehicle wheel according to Claim 8, characterised in that the bolt (28) is made in two parts, one part (37) being of a synthetic plastic material and comprising the shank and the bearing surfaces which belong to the bolt head, while the other part completes the bolt head and takes the form of a cap (39).

10. Motor vehicle wheel according to Claim 9, characterised in that the other part (39) is produced from an aluminium alloy.

11. Motor vehicle wheel according to one or more of the preceding claims, characterised in that the head of the bolt (28) is constructed as an externally shaped multi-sided head.

12. Motor vehicle wheel according to one or more of Claims 1 to 11, characterised in that the head of the bolt is constructed with a multi-sided recess socket.

13. Motor vehicle wheel according to one of Claims 11 or 12 or both, characterised in that the multi-sided shape is composed of a plurality of portions of a curve.

14. Motor vehicle wheel according to Claim 1, characterised in that anchored on the hub-cap (27) and projecting substantially parallel with and offset radially in respect of the axis of rotation (17) is a pin (46) which can fit into a measuring bore (47) in the spoke disc (11).

15. Motor vehicle wheel according to Claim 1, characterised in that the spoke disc comprises, disposed offset radially in relation to the axis of rotation, an abutment projection against which a matching projection from the hub-cap can be applied at least on one side in order to prevent any reciprocal relative rotation.

FIG.1

FIG. 2

FIG.3

FIG.4